(19) Europäisches Patentamt
European Patent Office
Office européen des brevets

(11) **EP 4 607 376 A1**

(12) **EUROPEAN PATENT APPLICATION**
published in accordance with Art. 153(4) EPC

(43) Date of publication:
**27.08.2025 Bulletin 2025/35**

(21) Application number: **23878822.8**

(22) Date of filing: **28.08.2023**

(51) International Patent Classification (IPC):
***G06F 18/22*** (2023.01)

(52) Cooperative Patent Classification (CPC):
**G06F 16/955; G06F 18/213; G06F 18/22;**
**G06F 18/2415**

(86) International application number:
**PCT/CN2023/115292**

(87) International publication number:
**WO 2024/082827 (25.04.2024 Gazette 2024/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.10.2022 CN 202211274116**

(71) Applicant: **DOUYIN VISION CO., LTD.**
**Beijing 100041 (CN)**

(72) Inventors:
- QIN, Yangyang
  **Beijing 100028 (CN)**
- DENG, Song
  **Beijing 100028 (CN)**
- LI, Xia
  **Beijing 100028 (CN)**
- SUN, Xinao
  **Beijing 100028 (CN)**
- LI, Minghui
  **Beijing 100028 (CN)**

(74) Representative: **Marks & Clerk LLP**
**15 Fetter Lane**
**London EC4A 1BW (GB)**

(54) **TEXT SIMILARITY MEASUREMENT METHOD AND APPARATUS, DEVICE, STORAGE MEDIUM, AND PROGRAM PRODUCT**

(57) The present disclosure relates to a text similarity measurement method and apparatus, device, storage medium, and program product. The method includes: obtaining a first text string and a second text string; constructing a joint probability distribution of the first text string and the second text string, and sampling the joint probability distribution to obtain a sampling string; calculating a distance from the first text string to the sampling string to obtain a first distance matrix, and calculating a distance from the second text string to the sampling string to obtain a second distance matrix; and determining a similarity between the first text string and the second text string based on the first distance matrix and the second distance matrix.

FIG. 1

**Description**

**CROSS-REFERENCE TO RELATED APPLICATIONS**

The present application is based on and claims priority to Chinese Patent Application No. 202211274116.5, filed on October 18, 2022, which is incorporated herein by reference in its entirety.

**TECHNICAL FIELD**

The present disclosure relates to the field of computer processing technologies, and in particular, to a text similarity measurement method and apparatus, a device, a storage medium, and a program product.

**BACKGROUND**

With the development of emerging technologies such as the Internet, the Internet of Things, artificial intelligence, and big data, massive text data is constantly emerging in various fields. Text similarity measurement methods are applied to more and more scenarios, for example, understanding of search content and indexing of web page links in a search engine, and evaluation of various information flow articles for duplication, plagiarism, homogenization, and the like. Text similarity measurement methods are involved.

Text similarity measurement methods in the related art all have different degrees of shortcomings for batch processing of massive texts. Some methods are only applicable to analysis of an extremely small amount of data. Some methods have high calculation costs and are difficult to be applied to big data and massive text processing. Some methods need to process texts in full, and it is difficult to independently calculate the similarity between two texts.

**SUMMARY**

To solve at least some of the above technical problems, embodiments of the present disclosure provide a text similarity measurement method and apparatus, a device, a storage medium, and a program product, which implement dimensionality reduction calculation of a text similarity measurement method and improve calculation efficiency. In addition, since the sampling string includes information of the two text strings, information loss is reduced while the dimensionality is reduced.

According to a first aspect, an embodiment of the present disclosure provides a text similarity measurement method. The method includes:

obtaining a first text string and a second text string;
constructing a joint probability distribution of the first text string and the second text string, and sampling the joint probability distribution to obtain a sampling string;
calculating a distance from the first text string to the sampling string to obtain a first distance matrix, and calculating a distance from the second text string to the sampling string to obtain a second distance matrix; and
determining a similarity between the first text string and the second text string based on the first distance matrix and the second distance matrix.

According to a second aspect, an embodiment of the present disclosure provides a text similarity measurement apparatus. The apparatus includes:

a text string obtaining module, configured to obtain a first text string and a second text string;
a sampling string determining module, configured to construct a joint probability distribution of the first text string and the second text string, and sample the joint probability distribution to obtain a sampling string;
a distance matrix calculating module, configured to calculate a distance from the first text string to the sampling string to obtain a first distance matrix, and calculate a distance from the second text string to the sampling string to obtain a second distance matrix; and
a text similarity measurement module, configured to determine a similarity between the first text string and the second text string based on the first distance matrix and the second distance matrix.

According to a third aspect, an embodiment of the present disclosure provides an electronic device. The electronic device includes:

one or more processors;

a storage apparatus, configured to store one or more programs, where

the one or more programs, when executed by the one or more processors, cause the one or more processors to implement the text similarity measurement method according to any one of the above first aspect.

According to a fourth aspect, an embodiment of the present disclosure provides a computer-readable storage medium having a computer program stored thereon, where the program, when executed by a processor, causes the text similarity measurement method according to any one of the above first aspect to be implemented.

According to a fifth aspect, an embodiment of the present disclosure provides a computer program product. The computer program product includes a computer program or instructions, where the computer program or instructions, when executed by a processor, cause the text similarity measurement method according to any one of the above first aspect to be implemented.

In the embodiments of the present disclosure, sampling is performed on a joint probability distribution of two text strings to obtain a sampling string, distance matrices between each of the two text strings and the sampling string are calculated, and then a similarity between the two distance matrices is calculated, to implement dimensionality reduction calculation of a text similarity measurement method and improve calculation efficiency. In addition, since the sampling string includes information of the two text strings, information loss is reduced while the dimensionality is reduced.

## BRIEF DESCRIPTION OF THE DRAWINGS

The above and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.

FIG. 1 is a schematic flowchart of a text similarity measurement method according to an embodiment of the present disclosure;

FIG. 2 is a schematic diagram of a joint probability distribution according to an embodiment of the present disclosure;

FIG. 3a is a schematic diagram of an initialization of edit distance according to an embodiment of the present disclosure;

FIG. 3b is a schematic diagram of an actual calculation process of edit distance according to an embodiment of the present disclosure;

FIG. 4a is a schematic diagram of a calculation process of edit distance according to an embodiment of the present disclosure;

FIG. 4b is a schematic diagram of a calculation process of edit distance according to an embodiment of the present disclosure;

FIG. 5a is a schematic diagram of a complete calculation process of edit distance according to an embodiment of the present disclosure;

FIG. 5b is a schematic diagram of a complete calculation process of edit distance according to an embodiment of the present disclosure;

FIG. 6 is a schematic diagram of vector extraction of an edit distance matrix according to an embodiment of the present disclosure;

FIG. 7 is a schematic flowchart of a text similarity measurement process according to an embodiment of the present disclosure;

FIG. 8 is a schematic diagram of a vector calculation process according to an embodiment of the present disclosure;

FIG. 9 is a structural schematic diagram of a text similarity measurement apparatus according to an embodiment of the present disclosure; and

FIG. 10 is a structural schematic diagram of an electronic device according to an embodiment of the present disclosure.

## DETAILED DESCRIPTION OF EMBODIMENTS

The embodiments of the present disclosure are described in more detail below with reference to the accompanying drawings. Although some embodiments of the present disclosure are shown in the drawings, it would be appreciated that the present disclosure may be implemented in various forms and should not be construed as being limited to the embodiments set forth herein. Rather, these embodiments are provided for a more thorough and complete understanding of the present disclosure. It would be appreciated that the accompanying drawings and the embodiments of the present disclosure are only for illustrative purposes, and are not intended to limit the scope of protection of the present disclosure.

It should be understood that the various steps described in the method implementations of the present disclosure may be performed in different orders, and/or performed in parallel. In addition, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of the messages or information exchanged between a plurality of apparatuses in the implementations of the present disclosure are used for illustrative purposes only, and are not used to limit the scope of these messages or information.

Before the embodiments of the present disclosure are described in further detail, the nouns and terms involved in the embodiments of the present disclosure are described. The nouns and terms involved in the embodiments of the present disclosure are applicable to the following explanations.

In order to solve various problems in text similarity measurement, many measurement methods have been proposed, and the technologies have evolved successively, including word frequency calculation, programming solution, a statistical model, word vector encoding, neural network inference, and the like.

The earliest text similarity calculation method is word frequency statistics, which is mainly measured by calculating a number of same characters in two texts. For example, for a string "abc" and a string "abd", they have the same characters "ab". The more the same characters, the more similar the two strings are. Subsequently, in order to further evaluate the impact of the string order on the similarity based on the number of statistics, an arrangement serial number of the string is introduced. When the word frequencies are the same, the smaller the difference between the arrangement serial numbers is, the higher the similarity is.

The statistical model, such as a term frequency-inverse document frequency (TF-IDF) model, consists of two parts: TF and IDF. A proportion of a specific character or word appearing in a single sentence or document is counted, and then a proportion of the character or word appearing in all sentences or documents is counted to obtain a probability value of the character or word appearing, to obtain a probability value vector of the sentence or document. Vector similarity between two probability value vectors is calculated as the similarity between two documents.

The TF-IDF is a type of early word vector encoding. However, since the statistical value is difficult to obtain semantic similarity, with the development of neural networks, many word vector encoding technologies based on neural networks have emerged, the most commonly used of which are a continuous bag-of-words (CBOW) model and a Skip-Gram model. The CBOW model infers a word vector of a specific word from word vectors of context-related words, while the Skip-Gram model calculates, in an opposite manner, context word vectors corresponding to the specific word from the word vector of the specific word. Both calculation method s can acquire the context semantics to a certain extent. However, just because there are more context inferences, the calculation consumption is large.

The current main text similarity technologies include word frequency calculation, programming solution, a statistical model, word vector encoding, neural network inference, and the like. However, for batch processing of massive texts, there are different degrees of shortcomings.

The word frequency calculation method is too rough, and is currently only used for analysis and description of an extremely small amount of data. The edit distance algorithm is difficult to be applied to big data and massive text processing due to high calculation costs. The statistical model is difficult to independently calculate the similarity between two texts because its statistical probability comes from full processing of texts. In addition, almost all current word vector encoding technologies require a large amount of text corpora for pre-training, and word encoding needs to be calculated from full documents. The similarity between two texts cannot be independently calculated, and the calculation consumption is also very high.

In addition, in order to deal with massive data, many data preprocessing methods have also emerged, for example, data dimensionality reduction. Data dimensionality reduction maps data in a high-dimensional space to a low-dimensional space on the basis of minimizing information loss, to improve data processing efficiency.

Current data dimensionality reduction technologies are mainly based on factor analysis, autoencoder, topic model, local embedding, and the like. However, a large amount of text corpora are required for training, and the effect of calculating two independent texts and batch processing of massive texts is not good.

In the embodiments of the present disclosure, a basic algorithm relied on by the text similarity measurement method is an edit distance algorithm proposed in 1965 by a Russian scientist Vladimir I. Levenshtein, also referred to as a Levenshtein distance (LD). Due to its intuitive and easy interpretation, and a good similarity measurement effect on strings, the algorithm has undergone some optimizations, and still has very extensive applications up to now. Even in programming languages such as python, there is a special third-party calculation package. The algorithm needs to be solved based on dynamic programming or recursion, and has large calculation consumption, and is difficult to be applied to big data and long text similarity measurement.

In the edit distance algorithm, the power order is high, and the time complexity and space complexity have little impact on a small amount of data. However, for big data and long texts, the resources to be consumed are huge. This also leads to the situation that the method is difficult to be widely promoted in the calculation of the current big text data.

To solve the above technical problems, the embodiments of the present disclosure provide a text similarity measurement method. By selecting a sampling string, distance matrices between each of two text strings and the sampling string are calculated, and then the similarity between the two text strings is calculated based on the two distance matrices to change single-stage calculation into two-stage calculation, thereby improving calculation efficiency, and especially, the effect is particularly obvious in massive big text data.

From the perspective of application value, the text similarity measurement method provided in the embodiments of the present disclosure can be widely applied to the fields of precision medicine, quantitative finance, intelligent voice, and the like. The method has very significant application value for web link analysis, password encoding, genome measurement, voice proofreading, and the like.

The text similarity measurement method provided in the embodiments of the present disclosure is described in detail below with reference to the accompanying drawings.

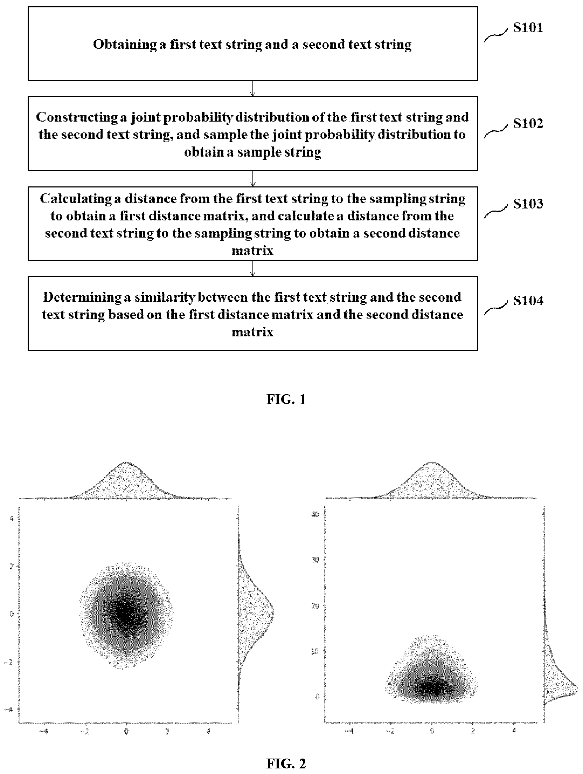

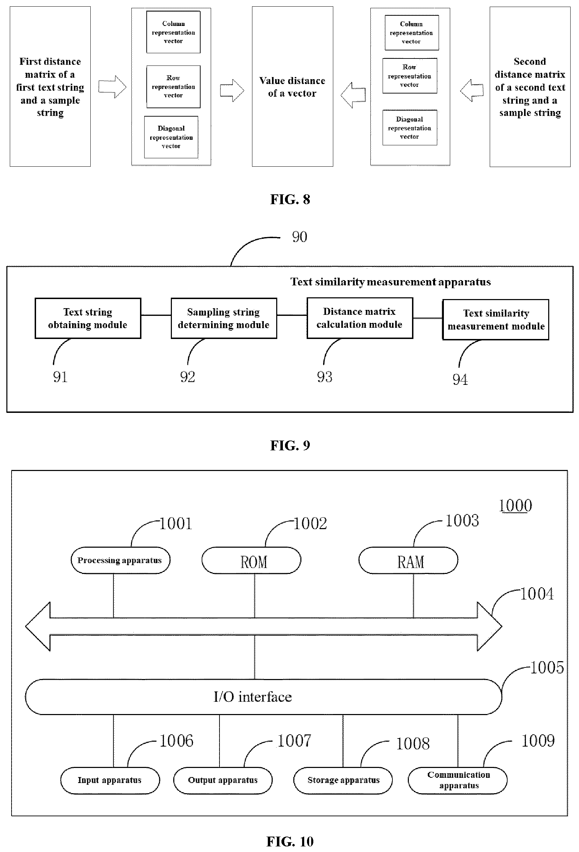

FIG. 1 is a flowchart of a text similarity measurement method according to an embodiment of the present disclosure. The method is applicable to a case of calculating the similarity between two texts. The method may be performed by a text similarity measurement apparatus described below with reference to FIG. 9. The text similarity measurement apparatus may be implemented in a software and/or hardware manner. The method may also be performed by an electronic device (including a terminal device) described below with reference to FIG. 10.

As shown in FIG. 1, the text similarity measurement method provided in the embodiment of the present disclosure mainly includes steps S101 to S104.

S101: Obtain a first text string and a second text string.

In the embodiments of the present disclosure, a text string is an expression form of a written language and may be a combination of a plurality of characters. The characters may include one or more of English characters, Chinese characters, punctuation marks, Roman characters, Greek characters, or other special characters. The first text string and the second text string refer to two text strings whose similarity needs to be measured.

In some embodiments of the present disclosure, after a trigger event of text similarity measurement is detected, the first text string and the second text string are obtained.

In an implementation of the present disclosure, the trigger event may be an event of receiving a text string input by a user. For example, after a user inputs a text string in a browser or an intelligent question answering system, a terminal device receives the text string, and it may be considered that the trigger event of text similarity measurement is detected. In this case, the terminal device may use the text string input by the user as the first text string, and randomly obtain one text string from a database as the second text string.

In an implementation of the present disclosure, the trigger event may also be an event of receiving a text similarity measurement instruction. For example, when a user wants to count the similarity between any two text strings in a terminal database, the user may input a similarity measurement instruction to the terminal device. The similarity measurement instruction may be a click instruction, a press instruction, a voice instruction, or the like. After receiving the similarity measurement instruction, the terminal device may consider that the trigger event of text similarity measurement is detected. In this case, the terminal device may randomly select two text strings from the database as the first text string and the second text string.

In an implementation of the present disclosure, the trigger event may also be an event of receiving a target task completion instruction. For example, a security risk is found in a network interface A, and the terminal device receives program code corresponding to the network interface A, and it may be considered that the trigger event of text similarity measurement is detected. In this case, the terminal device may use the program code corresponding to the network interface A as the first text string, and obtain program code corresponding to any network interface other than the network interface A as the second text string.

S102: Construct a joint probability distribution of the first text string and the second text string, and sample the joint probability distribution to obtain a sampling string.

In the embodiments of the present disclosure, characters included in the sampling string are all characters included in the first text string and/or the second text string.

In the embodiments of the present disclosure, constructing the joint probability distribution of the first text string and the second text string and sampling based on the joint probability distribution is an optimal solution for simultaneously retaining information of the two strings. The joint probability distribution may be a joint probability distribution between a normal distribution and a normal distribution, or a joint probability distribution between a normal distribution and an exponential distribution. This is not specifically limited in the embodiments of the present disclosure.

As shown in FIG. 2, a schematic diagram of a joint probability distribution between a normal distribution and a normal distribution and a schematic diagram of a joint probability distribution between a normal distribution and an exponential distribution are respectively shown. Random sampling in the joint probability distribution can retain the original text information to the greatest extent possible. At this time, the random sampling has no additional calculation overhead for big data calculation, and massive data calculation can be performed.

The sampling string obtained by data sampling of the joint probability distribution contains information in the first text string and the second text string at the same time, reducing information loss. In addition, the sampling also reduces data noise.

In an implementation of the present disclosure, sampling the joint probability distribution to obtain a sampling string includes: randomly sampling the joint probability distribution based on a preset sampling proportion to obtain a sampling string, where the preset sampling proportion is inversely proportional to a length of a text string.

The preset sampling proportion is a proportion of the sampling string obtained by sampling from the joint probability distribution, which is preset. Preferably, the preset sampling proportion is at most one quarter. When the preset sampling proportion is one quarter, the information loss can be reduced as much as possible while the dimensionality is reduced. Specifically, in the embodiments of the present disclosure, sampling of at most one quarter of the joint probability distribution is performed.

Furthermore, the preset sampling proportion is inversely proportional to the length of the text string. In other words, the longer the text string is, the smaller the preset sampling proportion is, and the better the performance optimization effect on big data is. It should be noted that as long as the preset sampling proportion does not cause the center position of the joint probability distribution to shift, the preset sampling proportion may be as small as possible, so that the dimensionality can be reduced to the greatest extent.

S103: Calculate a distance from the first text string to the sampling string to obtain a first distance matrix, and calculate a distance from the second text string to the sampling string to obtain a second distance matrix.

In the embodiments of the present disclosure, the first distance matrix and the second distance matrix may be any distance matrices for measuring text similarity. It should be noted that distance representation vectors are generated by using different methods when different similarity measurement strategies are used to obtain the distance matrices.

In an implementation of the present disclosure, an edit distance calculation algorithm is used to calculate the first distance matrix and the second distance matrix. The first distance matrix is used to represent an edit distance from the first text string to the sampling string, and the second distance matrix is used to represent an edit distance from the second text string to the sampling string.

The most representative programming solution is an edit distance, also referred to as a Levenshtein distance. A measurement method is to determine a minimum number of times of processing required to change one string into another string. The processing here includes deleting a string, inserting a string, and replacing a string. The fewer the number of times of processing, the higher the similarity.

The edit distance represents a minimum number of times of transformation required to transform one string into another string. The transformation here is mainly a delete, insert, and replace operation. If $i$ and j are respectively used to represent an ith bit in a string $a$ and an jth bit in a string b. An edit distance between a first i bits in the string $a$ and a first j bits in the string b is $lev_{a,b}(i,j)$. The edit distance may be expressed as:

$$lev_{a,b}(i,j) = \begin{cases} \max(i,j) & if\, min(i,j) = 0 \\ \min \begin{cases} lev_{a,b}(i-1,j) + 1 \\ lev_{a,b}(i,j-1) + 1 \\ lev_{a,b}(i-1,j-1) + 1_{(a_i \neq b_i)} \end{cases} & otherwise \end{cases}$$

If $|a|$ and $|b|$ are respectively used to represent lengths of two strings $a$ and b, an edit distance between the string $a$ and the string b is $lev_{a,b}(|a|, |b|)$, that is, an edit distance when i = $|a|$ and $j$ = $|b|$.

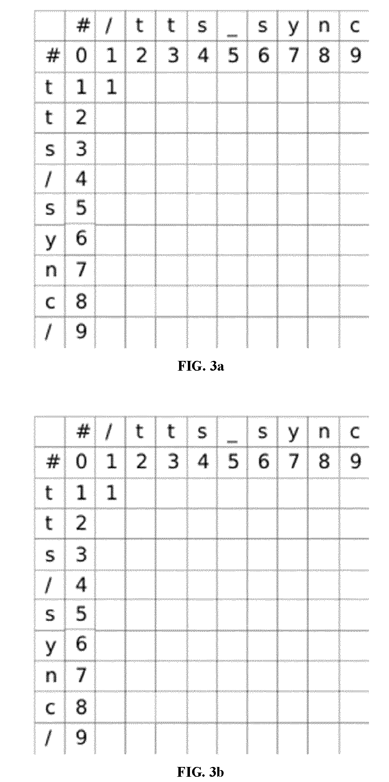

The first line in otherwise in the above formula represents a delete operation, the second line represents an insert operation, and the third line represents a replace operation. In the embodiments of the present disclosure, an example of calculating the similarity between the string "/tts_sync" and the string "tts/sync/" by using the edit distance algorithm is used to describe the calculation process and problems of the edit distance in detail with reference to FIGS. 3a, 3b, 4a, 4b, 5a, and 5b.

As shown in FIG. 3a, an initialization result of a distance, that is, a part where ifmin(i,j) = 0 in the above edit distance calculation formula is taken, and max(i,j) is given. An initial value is assigned to each bit in the string $a$ and the string b. In some embodiments, the initial value is sequentially incremented by 1 from 0 in the original order of the string, so that a sequence of 0 to 9 in the second row and a sequence of 0 to 9 in the second column may be obtained. As shown in FIG. 3b, the edit distance is actually calculated, that is, a part of otherwise in the above edit distance calculation formula. A value of any bit in row 3 and column 3 is a minimum value of the following three values. The first value: a value in row 2 and column 3 + 1, which is equal to 2. The second value: a value in row 3 and column 2 + 1, which is equal to 2. The third value: Because "/" and "t" are different, a value is a value in row 2 and column 2 + 1, which is equal to 1. The minimum value of the above three values is 1. That is, a value in row 3 and column 3 is 1.

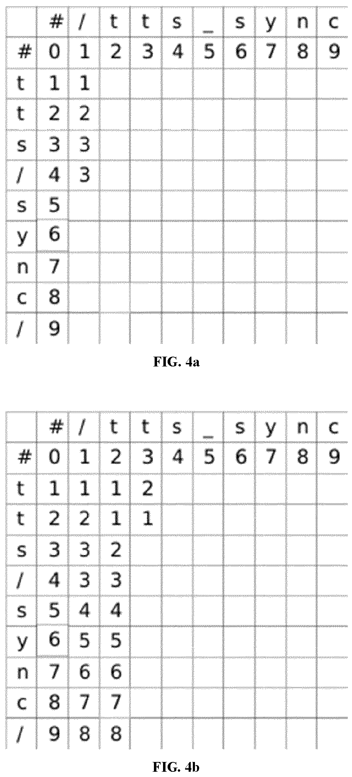

FIGS. 4a and 4b further show an edit distance calculation process. As shown in FIG. 4a, a value in row 6 and column 3 is 3. Because two characters are both "/", a value in row 6 and column 3 is a number in row 5 and column 2 on a diagonal line. At this time, compared with a value in row 5 and column 3 + 1 and a value in row 6 and column 2 + 1, a minimum value of the three values is 3. As shown in FIG. 4b, a value in row 4 and column 5 is 1, which is less than a value of 2 in row 3 and column 5. This further verifies a problem solved by the edit distance algorithm, that is, $(i, j)$ measures a distance between a first $i$ characters in one string and a first $j$ characters in the other string. Obviously, a number of edit times of changing "/tt" to "tt" is significantly less than a number of edit times of changing "/tt" to "t".

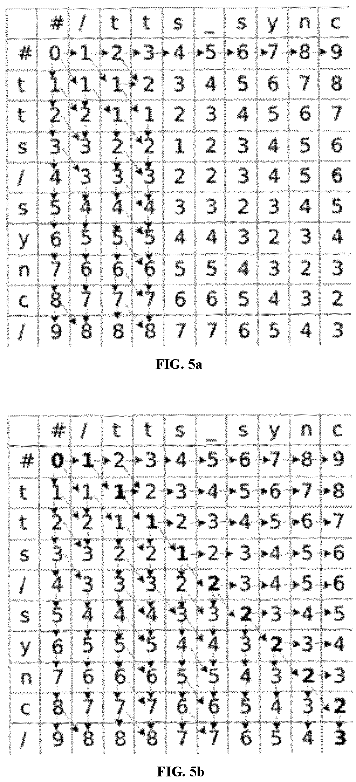

FIG. 5a shows an intermediate process of deduction, and FIG. 5b shows a complete calculation process. A bold number is a change path of a minimum distance. Finally, it is calculated that an edit distance between the string "/tts_sync" and the string "tts/sync/" is 3, that is, 3 conversions are required. Intuitively, "/" at a start position needs to be deleted, "_" needs to be replaced with "/", and "/" needs to be inserted at an end position, for a total of 3 operations.

Combined with the deduction process, it is found that the edit distance algorithm may have two solution methods, namely, recursive solution and dynamic programming solution. Any one of the above solution methods may be used to calculate a distance from the first text string to the sampling string to obtain the first distance matrix, and calculate a distance from the second text string to the sampling string to obtain the second distance matrix.

S104: Determine a similarity between the first text string and the second text string based on the first distance matrix and the second distance matrix.

In an implementation of the present disclosure, the similarity between the first distance matrix and the second distance matrix is calculated, and the similarity between the two distance matrices is used as the similarity between the first text string and the second text string.

Optionally, a similarity between the two matrices is calculated by using an Euclidean distance or cosine similarity. It should be noted that a similarity between the first distance matrix and the second distance matrix may also be calculated by using another matrix similarity calculation method. This is not specifically limited in this embodiment.

In an implementation of the present disclosure, calculating a feature vector of the first distance matrix by using a feature vector calculation method is used as a first feature vector, calculating a feature vector of the second distance matrix by using a feature vector calculation method is used as a second feature vector, and calculating a similarity between the two feature vectors is used as the similarity between the first text string and the second text string. Feature vector calculation may be implemented by using matrix decomposition. This is not specifically limited in this embodiment.

In an implementation of the present disclosure, determining a similarity between the first text string and the second text string based on the first distance matrix and the second distance matrix includes: performing feature extraction from the first distance matrix to obtain a first distance representation vector, where the first distance representation vector includes a column representation vector, a diagonal representation vector, and a row representation vector corresponding to the first distance matrix; performing feature extraction from the second distance matrix to obtain a second distance representation vector, where the second distance representation vector includes a column representation vector, a diagonal representation vector, and a row representation vector corresponding to the second distance matrix; and calculating vector similarity between the first distance representation vector and the second distance representation vector, and using the vector similarity as the similarity between the first string and the second text string.

The first distance representation vector may be understood as a vector that can be extracted from the first distance matrix and represents the first distance matrix for matrix similarity calculation. The second distance representation vector may be understood as a vector that can be extracted from the second distance matrix and represents the second distance matrix for matrix similarity calculation.

In an implementation of the present disclosure, the feature extraction includes: extracting a last row sequence in the distance matrix as the row representation vector; extracting a last column sequence in the distance matrix as the column representation vector; and extracting a diagonal sequence in the distance matrix as the diagonal representation vector.

The text similarity measurement method provided in the embodiments of the present disclosure is based on a design idea of the edit distance. A distance value at a rear position (right and bottom) in the distance matrix depends on a previous distance value. Theoretically, selection of a last row, a last column, and a diagonal sequence in the distance matrix changes, which can represent the similarity information of the two text strings. For example, for the text strings "/tts_sync" and "tts/sync/", a matrix representation vector may be formed by extracting a shortest path on a diagonal of the distance matrix, a distance change of the last column in the distance matrix, and a distance change of the last row in the distance matrix.

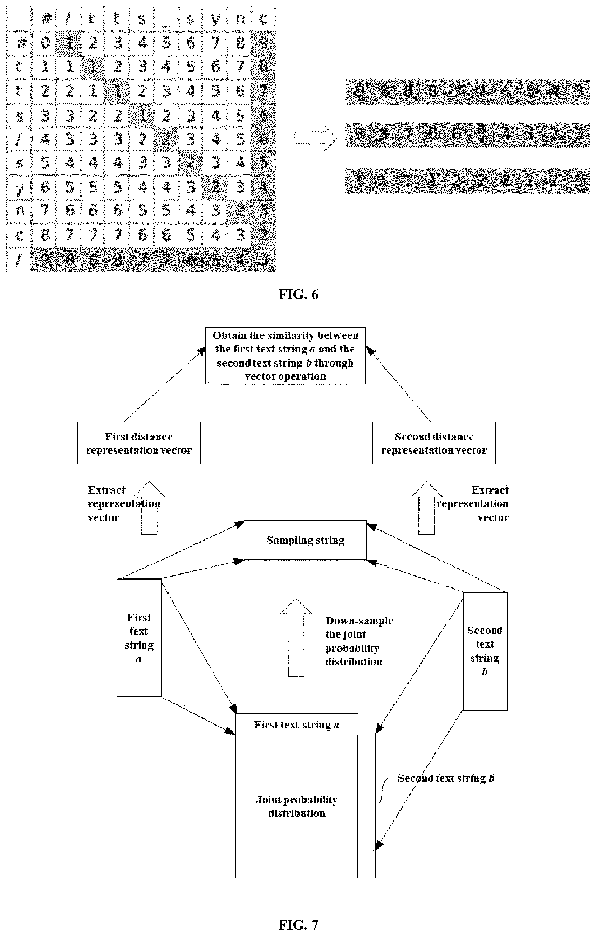

As shown in FIG. 6, a shortest path (1, 1, 1, 1, 2, 2, 2, 2, 2, 3) on a diagonal of the distance matrix, a last column (9, 8, 7, 6, 6, 5, 4, 3, 2, 3) in the distance matrix, and a last row (9, 8, 8, 8, 7, 7, 6, 5, 4, 3) in the distance matrix are extracted to obtain the distance representation vector of the left distance matrix in FIG. 6. In the embodiments of the present disclosure, the distance representation vector of the distance matrix is extracted, and the similarity calculation of texts is directly transformed into the value calculation of the vector. This potentially completes the encoding from the text strings to word vectors.

In the embodiments of the present disclosure, the distance representation vector is extracted from each of the two distance matrices, and the similarity between the two distance representation vectors is calculated and used as the similarity between the first text string and the second text string. Because the calculation amount of the vector similarity calculation method is less than that of the matrix similarity calculation method, the technical solution provided in the embodiments of the present disclosure can further reduce the calculation amount and improve the calculation efficiency.

In an implementation of the present disclosure, the vector similarity is determined by using an Euclidean distance or cosine similarity.

Specifically, the vector similarity is an Euclidean distance between the first distance representation vector and the second distance representation vector, or a cosine included angle between the first distance representation vector and the second distance representation vector.

Embodiments of the present disclosure provide a text similarity measurement method and apparatus, a device, a storage medium, and a program product. The method includes: obtaining a first text string and a second text string; constructing a joint probability distribution of the first text string and the second text string, and sampling the joint probability distribution to obtain a sampling string; calculating a distance from the first text string to the sampling string to obtain a first distance matrix, and calculating a distance from the second text string to the sampling string to obtain a second distance matrix; and determining a similarity between the first text string and the second text string based on the first distance matrix and the second distance matrix. In the embodiments of the present disclosure, sampling is performed on a joint probability distribution of two text strings to obtain a sampling string, distance matrices between each of the two text strings and the sampling string are calculated, and then a similarity between the two distance matrices is calculated, to implement dimensionality reduction calculation of a text similarity measurement method and improve calculation efficiency. In addition, since the sampling string includes information of the two text strings, information loss is reduced while the dimensionality is reduced.

In the embodiments of the present disclosure, a schematic diagram of an architecture of text similarity measurement is provided. As shown in FIG. 7, first, a joint probability distribution is made for two text strings a and b to be calculated, then down-sampling is performed on the joint probability distribution to obtain a sampling string, then edit distance calculation is separately performed on the text string a and the text string b and the sampling string, and the calculation process generates a distance matrix as shown in FIG. 5b. A distance representation vector is extracted from the distance matrix, and finally, a value operation is performed on the distance representation vector to obtain the similarity between the two distance representation vectors, that is, the similarity between the text string a and the text string b.

FIG. 8 is a schematic diagram of a vector calculation process according to an embodiment of the present disclosure.

FIG. 8 shows a process of calculating an edit distance between the text string a and the sampling string and a process of calculating an edit distance between the text string b and the sampling string. The first text string a and the second text string b are respectively used to calculate a distance matrix with the sampling string, extract row, column, and diagonal vectors, and use the row, column, and diagonal vectors as distance representation vectors. Then, the value similarity of the distance representation vectors is calculated to obtain the similarity between the first text string a and the second text string b. The two processes of calculating the distance matrix between the first text string a and the sampling string and calculating the distance matrix between the second text string b and the sampling string may be performed in parallel, further improving the batch processing performance for big data.

The text similarity measurement method provided in the present disclosure splits a single-stage high-dimensional calculation process into a two-stage low-dimensional calculation process, effectively improving the similarity measurement efficiency of massive texts. The main technical effects are as follows: Batch processing of massive text similarities is made possible. Through a distribution sampling and representation vector extraction process, the data is dimensionally reduced, and the calculation efficiency is improved while ensuring the information amount as much as possible. Compared with a traditional edit distance calculation method, the complexity is reduced by at least 70%, and the longer the text, the more significant the performance improvement effect. The performance of big text data is expected to be improved by more than an order of magnitude. Similarity measurement can be performed on any two strings or character sequences. Word vectors between two pairwise specific comparison strings are generated in the calculation process. There are no additional requirements for text segmentation and semantics. A large amount of corpora are not required for supervised or unsupervised pre-training, and there is no additional calculation overhead except for the actual batch processing process. Thanks to the down-sampling process of the text distribution, the impact of data noise on the similarity calculation is also reduced to a certain extent.

The text similarity measurement method provided in the present disclosure is a generalized big data processing technology, and can be migrated between different application scenarios at almost zero cost, and can be directly deployed to big data engines such as MapReduce, Spark, and Storm through code.

In some embodiments of the present disclosure, an application scenario of the text similarity measurement method is provided. Specifically, the text similarity measurement method further includes: obtaining request response data transmitted by a first network interface as a first text string; obtaining request response data transmitted by a second network interface as a second text string; and determining whether the first network interface and the second network interface have a similar security risk based on the similarity between the first text string and the second text string.

The text similarity measurement method provided in the embodiments of the present disclosure can be applied to many scenarios of text similarity measurement in big data. For example, in the field of network security, the text similarity measurement method provided in the embodiments of the present disclosure can be directly used to measure the similarity of data returned by different network interfaces, thereby mining more similar security risks.

The first network interface is a network interface in which a security risk is found, and the second network interface is any network interface other than the first network interface. For example, a security risk is found in a first network interface A, request response data of the first network interface A is obtained as a first text string, any network interface other than the first network interface is obtained as a second network interface B, request response data of the second network interface B is obtained as a second text string, and the similarity between the first text string and the second text string is calculated by using the text similarity measurement method provided in the above embodiments. If the similarity between the first text string and the second text string exceeds a set value, it indicates that the second network interface B has similar request and return parameters as the first network interface A, and it can be considered to a great extent that the network interface B may also have a similar security risk. When faced with hundreds of millions of network interface traffic, the text similarity measurement method provided in the embodiments of the present disclosure can quickly complete the measurement task. In some embodiments, the set value may be set according to the actual situation, for example, 80% or 90%.

In some embodiments of the present disclosure, an application scenario of the text similarity measurement method is also provided. Specifically, any test result obtained through white-box security testing is obtained as a first text string; Uniform Resource Locator (URL) interface information is obtained as a second text string; and URL interface information corresponding to the test result is determined based on the similarity between the first text string and the second text string.

In the embodiments of the present disclosure, in the field of network security, there are many automated tools for risk scanning, and there are also many manual tests and verifications. Automated tools for risk scanning include: white-box security testing that identifies potential vulnerability risks based on data flow dependencies of source code of an application; black-box security testing that imitates hackers of various skill levels to initiate data requests from the outside; and security vulnerabilities manually discovered. In order to improve the efficiency between automated tools and between automated tools and manual as much as possible, at least test results in each dimension need to be connected in the URL interface dimension. However, white-box security testing is based on source code of an application repository, and it is difficult to directly obtain interface information in the URL dimension.

In the embodiments of the present disclosure, the test result refers to a test result of any information such as a repository, a route, a file, and source code scanned by white-box security testing. The test result is used as the first text string, and information such as a path, a request body, and a response body in the URL dimension is obtained as the second text string. The similarity between the first text string and the second text string is calculated by using the text similarity measurement method provided in the above embodiments. If the similarity between the first text string and the second text string exceeds a set value, it may be considered that the URL dimension information used as the second text string has a correspondence with the test result, and a similarity association relationship is established between the two.

FIG. 9 is a schematic diagram of a structure of a text similarity measurement apparatus according to an embodiment of the present disclosure. The text similarity measurement apparatus is applicable to a case of calculating the similarity between two texts.

As shown in FIG. 9, the text similarity measurement apparatus 90 provided in the embodiment of the present disclosure mainly includes: a text string obtaining module 91, a sampling string determining module 92, a distance matrix calculation module 93, and a text similarity measurement module 94.

The text string obtaining module 91 is configured to obtain a first text string and a second text string. The sampling string determining module 92 is configured to construct a joint probability distribution of the first text string and the second text string, and sample the joint probability distribution to obtain a sampling string. The distance matrix calculation module 93 is configured to calculate a distance from the first text string to the sampling string to obtain a first distance matrix, and calculate a distance from the second text string to the sampling string to obtain a second distance matrix. The text similarity measurement module 94 is configured to determine a similarity between the first text string and the second text string based on the first distance matrix and the second distance matrix.

In some embodiments of the present disclosure, an edit distance calculation algorithm is used to calculate the first distance matrix and the second distance matrix. The first distance matrix is used to represent an edit distance from the first text string to the sampling string, and the second distance matrix is used to represent an edit distance from the second text string to the sampling string.

In some embodiments of the present disclosure, the text similarity measurement module 94 includes: a first distance representation vector extraction unit, configured to perform feature extraction from the first distance matrix to obtain a first distance representation vector, where the first distance representation vector includes a column representation vector, a diagonal representation vector, and a row representation vector corresponding to the first distance matrix; a second distance representation vector extraction unit, configured to perform feature extraction from the second distance matrix to obtain a second distance representation vector, where the second distance representation vector includes a column representation vector, a diagonal representation vector, and a row representation vector corresponding to the second distance matrix; and a text similarity calculation unit, configured to calculate vector similarity between the first distance representation vector and the second distance representation vector, and use the vector similarity as the similarity between the first string and the second text string.

In some embodiments of the present disclosure, the feature extraction includes: extracting a last row sequence in the distance matrix as the row representation vector; extracting a last column sequence in the distance matrix as the column representation vector; and extracting a diagonal sequence in the distance matrix as the diagonal representation vector.

In some embodiments of the present disclosure, the sampling string determining module 92 is specifically configured to randomly down-sample the joint probability distribution based on a preset sampling proportion to obtain a sampling string, where the preset sampling proportion is inversely proportional to a length of a text string.

In some embodiments of the present disclosure, the vector similarity is determined by using an Euclidean distance or cosine similarity.

In some embodiments of the present disclosure, the apparatus further includes: a first text string determining module, configured to obtain request response data transmitted by a first network interface as a first text string; a second text string determining module, configured to obtain request response data transmitted by a second network interface as a second text string; and a security risk similarity determining module, configured to determine whether the first network interface and the second network interface have a similar security risk based on the similarity between the first text string and the second text string.

In some embodiments of the present disclosure, the first text string determining module is further configured to obtain a test result obtained through white-box security testing as a first text string; the second text string determining module is further configured to obtain Uniform Resource Locator (URL) interface information as a second text string; and a correspondence determining module is configured to determine URL interface information corresponding to the test result based on the similarity between the first text string and the second text string.

It should be noted that, in the embodiments of the text similarity measurement apparatus 90, the included modules are only divided according to functional logic, but are not limited to the above division, as long as corresponding functions can be implemented. In addition, specific names of the functional modules are only used to facilitate distinction from each other, and are not used to limit the scope of protection of the present disclosure. The text similarity measurement apparatus 90 may be implemented by using software and/or hardware. Specifically, each module of the text similarity measurement apparatus 90 may be implemented as a software component executed on one or more general-purpose processors, or may be implemented as hardware such as a programmable logic device and/or a special integrated circuit for performing some functions. In some embodiments, these modules may be embodied in the form of a software product, which may be stored in a non-volatile storage medium. The non-volatile storage medium includes a program that causes a computer device (for example, a personal computer, a server, a network device, a mobile terminal, and the like) to execute the method described in the embodiments of the present disclosure. In some embodiments, the above modules may also be implemented on a single device or distributed on a plurality of devices. The functions of these modules may be combined with each other or further divided into a plurality of sub-modules.

The text similarity measurement apparatus provided in the embodiments of the present disclosure can perform the steps performed in the text similarity measurement method provided in the method embodiments of the present disclosure. Specific execution steps and beneficial effects are not described herein again.

FIG. 10 is a schematic diagram of a structure of an electronic device according to an embodiment of the present disclosure. Reference is specifically made to FIG. 10 below, which shows a schematic diagram of a structure of an electronic device 1000 suitable for implementing the text similarity measurement method provided in the embodiments of the present disclosure. The electronic device 1000 in the embodiments of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (for example, a vehicle navigation terminal), and wearable terminal devices, and fixed terminals such as a digital television (TV), a desktop computer, and a smart home device. The electronic device 1000 shown in FIG. 10 is merely an example, and shall not impose any limitation on the function and scope of use of the embodiments of the present disclosure.

As shown in FIG. 10, the electronic device 1000 may include a processing apparatus (for example, a central processor, a graphics processor, and the like) 1001, which may perform various appropriate actions and processing in accordance with a program stored in a read-only memory (ROM) 1002 or a program loaded from a storage apparatus 1008 into a random access memory (RAM) 1003 to implement the text similarity measurement method according to the embodiments of the present disclosure. The RAM 1003 further stores various programs and data required for the operation of the electronic device 1000. The processing apparatus 1001, the ROM 1002, and the RAM 1003 are connected to each other through a bus 1004. An input/output (I/O) interface 1005 is also connected to the bus 1004.

Generally, the following apparatus may be connected to the I/O interface 1005: an input apparatus 1006 including, for example, a touch screen, a touchpad, a keyboard, a mouse, a camera, a microphone, an accelerometer, a gyroscope, and the like; an output apparatus 1007 including, for example, a liquid crystal display (LCD), a speaker, a vibrator, and the like; a storage apparatus 1008 including, for example, a tape and a hard disk; and a communication apparatus 1009. The communication apparatus 1009 may allow the electronic device 1000 to perform wireless or wired communication with other devices to exchange data. Although FIG. 10 shows the electronic device 1000 having various apparatus, it should be understood that it is not required to implement or have all of the shown apparatus. It is possible to implement more or fewer apparatus alternatively.

In particular, according to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program code for performing the method shown in the flowchart, so as to implement the text similarity measurement method as described above. In such an embodiment, the computer program may be downloaded from a network through the communication apparatus 1009 and installed, installed from the storage apparatus 1008, or installed from the ROM 1002. When the computer program is executed by the processing apparatus 1001, the above-mentioned functions defined in the method of the embodiment of the present disclosure are performed.

It should be noted that the above computer-readable medium described in the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a RAM, a ROM, an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate by using any network protocol to be tested and known or to be developed in the future, such as a hypertext transfer protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any network to be tested and known or to be developed in the future.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: obtain a first text string and a second text string; construct a joint probability distribution of the first text string and the second text string, and sample the joint probability distribution to obtain a sampling string; calculate a distance from the first text string to the sampling string to obtain a first distance matrix, and calculate a distance from the second text string to the sampling string to obtain a second distance matrix; and determine a similarity between the first text string and the second text string based on the first distance matrix and the second distance matrix.

Optionally, when the one or more programs are executed by the electronic device, the electronic device may further perform other steps described in the above embodiments.

The computer program code for performing the operations of the present disclosure can be written in one or more programming languages or a combination thereof, where the programming languages include but are not limited to an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving the remote computer, the remote computer may be connected to the computer of the user over any type of network, including a local area network (LAN) or a wide area network (WAN), or may be connected to an external computer (for example, connected over the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by means of software, or may be implemented by means of hardware. The name of a unit does not constitute a limitation on the unit in some cases.

The functions described herein above may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), and the like.

According to one or more embodiments of the present disclosure, the present disclosure provides a text similarity measurement method, including: obtaining a first text string and a second text string; constructing a joint probability distribution of the first text string and the second text string, and sampling the joint probability distribution to obtain a sampling string; calculating a distance from the first text string to the sampling string to obtain a first distance matrix, and calculating a distance from the second text string to the sampling string to obtain a second distance matrix; and determining a similarity between the first text string and the second text string based on the first distance matrix and the second distance matrix.

According to one or more embodiments of the present disclosure, the present disclosure provides a text similarity measurement apparatus, including: a text string obtaining module, configured to obtain a first text string and a second text string; a sampling string determining module, configured to construct a joint probability distribution of the first text string and the second text string, and sample the joint probability distribution to obtain a sampling string; a distance matrix calculation module, configured to calculate a distance from the first text string to the sampling string to obtain a first distance matrix, and calculate a distance from the second text string to the sampling string to obtain a second distance matrix; and a text similarity measurement module, configured to determine a similarity between the first text string and the second text string based on the first distance matrix and the second distance matrix.

According to one or more embodiments of the present disclosure, the present disclosure provides an electronic device, including:

one or more processors;
a memory configured to store one or more programs; and
when the one or more programs are executed by the one or more processors, the one or more processors are caused to implement the text similarity measurement method according to any one of the present disclosure.

According to one or more embodiments of the present disclosure, the present disclosure provides a computer-readable storage medium having a computer program stored thereon, where the text similarity measurement method according to any one of the present disclosure is implemented when the program is executed by a processor.

The embodiments of the present disclosure further provide a computer program product. The computer program product includes a computer program or instruction, and the text similarity measurement method as described above is implemented when the computer program or instruction is executed by a processor.

The embodiments of the present disclosure further provide a computer program/instruction. The text similarity measurement method according to any one of the embodiments described above is implemented when the computer program/instruction is executed by a processor.

The foregoing descriptions are merely preferred embodiments of the present disclosure and explanations of the applied technical principles. Persons skilled in the art should understand that the scope of disclosure involved in the present disclosure is not limited to the technical solutions formed by specific combinations of the foregoing technical features, and should also cover other technical solutions formed by any combination of the foregoing technical features or their equivalent features without departing from the foregoing concept of disclosure. For example, a technical solution formed by replacing the foregoing features with technical features with similar functions disclosed in the present disclosure (but not limited thereto).

In addition, although various operations are depicted in a specific order, it should be understood as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features described in the context of separate embodiments can also be implemented in combination in a single embodiment. In contrast, various features described in the context of a single embodiment can also be implemented in multiple embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

**Claims**

1. A text similarity measurement method, comprising:

   obtaining a first text string and a second text string;
   constructing a joint probability distribution of the first text string and the second text string, and sampling the joint probability distribution to obtain a sampling string;
   calculating a distance from the first text string to the sampling string to obtain a first distance matrix, and calculating a distance from the second text string to the sampling string to obtain a second distance matrix; and
   determining a similarity between the first text string and the second text string based on the first distance matrix and the second distance matrix.

2. The method according to claim 1, wherein the first distance matrix and the second distance matrix are calculated by using an edit distance calculation algorithm, the first distance matrix is used to represent an edit distance from the first text string to the sampling string, and the second distance matrix is used to represent an edit distance from the second text string to the sampling string.

3. The method according to claim 2, wherein the determining a similarity between the first text string and the second text string based on the first distance matrix and the second distance matrix comprises:

   performing feature extraction from the first distance matrix to obtain a first distance representation vector, wherein the first distance representation vector comprises a column representation vector, a diagonal representation vector, and a row representation vector corresponding to the first distance matrix;
   performing feature extraction from the second distance matrix to obtain a second distance representation vector, wherein the second distance representation vector comprises a column representation vector, a diagonal representation vector, and a row representation vector corresponding to the second distance matrix; and
   calculating vector similarity between the first distance representation vector and the second distance representation vector, and using the vector similarity as the similarity between the first string and the second text string.

4. The method according to claim 3, wherein the feature extraction comprises:

   extracting a last row sequence in the distance matrix as the row representation vector;
   extracting a last column sequence in the distance matrix as the column representation vector; and
   extracting a diagonal sequence in the distance matrix as the diagonal representation vector.

5. The method according to any one of claims 1 to 4, wherein the sampling the joint probability distribution to obtain a sampling string comprises:
randomly down-sampling the joint probability distribution based on a preset sampling proportion to obtain a sampling string, wherein the preset sampling proportion is inversely proportional to a length of a text string.

6. The method according to claim 3 or 4, wherein the vector similarity is determined by an Euclidean distance or cosine similarity.

7. The method according to any one of claims 1 to 6, wherein the obtaining a first text string and a second text string comprises:

obtaining request response data transmitted by a first network interface as the first text string; and
obtaining request response data transmitted by a second network interface as the second text string,
and the method further comprises:
determining whether the first network interface and the second network interface have a similar security risk based on the similarity between the first text string and the second text string.

8. The method according to any one of claims 1 to 7, wherein the obtaining a first text string and a second text string comprises:

obtaining a test result from white-box security testing as the first text string; and
obtaining Uniform Resource Locator (URL) interface information as the second text string,
and the method further comprises:
determining URL interface information corresponding to the test result based on the similarity between the first text string and the second text string.

9. A text similarity measurement apparatus, comprising:

a text string obtaining module, configured to obtain a first text string and a second text string;
a sampling string determining module, configured to construct a joint probability distribution of the first text string and the second text string, and sample the joint probability distribution to obtain a sampling string;
a distance matrix calculation module, configured to calculate a distance from the first text string to the sampling string to obtain a first distance matrix, and calculate a distance from the second text string to the sampling string to obtain a second distance matrix; and
a text similarity measurement module, configured to determine a similarity between the first text string and the second text string based on the first distance matrix and the second distance matrix.

10. An electronic device, comprising:

one or more processors; and
a storage apparatus configured to store one or more programs, wherein the one or more programs, when executed by the one or more processors, cause the one or more processors to perform the following operations:

obtaining a first text string and a second text string;
constructing a joint probability distribution of the first text string and the second text string, and sampling the joint probability distribution to obtain a sampling string;
calculating a distance from the first text string to the sampling string to obtain a first distance matrix, and calculating a distance from the second text string to the sampling string to obtain a second distance matrix; and
determining a similarity between the first text string and the second text string based on the first distance matrix and the second distance matrix.

11. The electronic device according to claim 10, wherein the first distance matrix and the second distance matrix are calculated by using an edit distance calculation algorithm, the first distance matrix is used to represent an edit distance from the first text string to the sampling string, and the second distance matrix is used to represent an edit distance from the second text string to the sampling string.

12. The electronic device according to claim 11, wherein the operation of determining a similarity between the first text string and the second text string based on the first distance matrix and the second distance matrix further comprises the following operations:

performing feature extraction from the first distance matrix to obtain a first distance representation vector, wherein the first distance representation vector comprises a column representation vector, a diagonal representation vector, and a row representation vector corresponding to the first distance matrix;

performing feature extraction from the second distance matrix to obtain a second distance representation vector, wherein the second distance representation vector comprises a column representation vector, a diagonal representation vector, and a row representation vector corresponding to the second distance matrix; and

calculating vector similarity between the first distance representation vector and the second distance representation vector, and using the vector similarity as the similarity between the first string and the second text string.

13. The electronic device according to any one of claims 10 to 12, wherein the operation of sampling the joint probability distribution to obtain a sampling string further comprises the following operation:

randomly down-sampling the joint probability distribution based on a preset sampling proportion to obtain a sampling string, wherein the preset sampling proportion is inversely proportional to a length of a text string.

14. A computer-readable storage medium having a computer program stored thereon, wherein the method according to any one of claims 1 to 8 is implemented when the program is executed by a processor.

15. A computer program product, wherein the computer program product comprises a computer program or instruction, and the method according to any one of claims 1 to 8 is implemented when the computer program or instruction is executed by a processor.

Obtaining a first text string and a second text string — S101

Constructing a joint probability distribution of the first text string and the second text string, and sample the joint probability distribution to obtain a sample string — S102

Calculating a distance from the first text string to the sampling string to obtain a first distance matrix, and calculate a distance from the second text string to the sampling string to obtain a second distance matrix — S103

Determining a similarity between the first text string and the second text string based on the first distance matrix and the second distance matrix — S104

**FIG. 1**

**FIG. 2**

|   | # | / | t | t | s | _ | s | y | n | c |
|---|---|---|---|---|---|---|---|---|---|---|
| # | 0 | 1 | 2 | 3 | 4 | 5 | 6 | 7 | 8 | 9 |
| t | 1 | 1 |   |   |   |   |   |   |   |   |
| t | 2 |   |   |   |   |   |   |   |   |   |
| s | 3 |   |   |   |   |   |   |   |   |   |
| / | 4 |   |   |   |   |   |   |   |   |   |
| s | 5 |   |   |   |   |   |   |   |   |   |
| y | 6 |   |   |   |   |   |   |   |   |   |
| n | 7 |   |   |   |   |   |   |   |   |   |
| c | 8 |   |   |   |   |   |   |   |   |   |
| / | 9 |   |   |   |   |   |   |   |   |   |

**FIG. 3a**

|   | # | / | t | t | s | _ | s | y | n | c |
|---|---|---|---|---|---|---|---|---|---|---|
| # | 0 | 1 | 2 | 3 | 4 | 5 | 6 | 7 | 8 | 9 |
| t | 1 | 1 |   |   |   |   |   |   |   |   |
| t | 2 |   |   |   |   |   |   |   |   |   |
| s | 3 |   |   |   |   |   |   |   |   |   |
| / | 4 |   |   |   |   |   |   |   |   |   |
| s | 5 |   |   |   |   |   |   |   |   |   |
| y | 6 |   |   |   |   |   |   |   |   |   |
| n | 7 |   |   |   |   |   |   |   |   |   |
| c | 8 |   |   |   |   |   |   |   |   |   |
| / | 9 |   |   |   |   |   |   |   |   |   |

**FIG. 3b**

| | # | / | t | t | s | _ | s | y | n | c |
|---|---|---|---|---|---|---|---|---|---|---|
| # | 0 | 1 | 2 | 3 | 4 | 5 | 6 | 7 | 8 | 9 |
| t | 1 | 1 | | | | | | | | |
| t | 2 | 2 | | | | | | | | |
| s | 3 | 3 | | | | | | | | |
| / | 4 | 3 | | | | | | | | |
| s | 5 | | | | | | | | | |
| y | 6 | | | | | | | | | |
| n | 7 | | | | | | | | | |
| c | 8 | | | | | | | | | |
| / | 9 | | | | | | | | | |

**FIG. 4a**

| | # | / | t | t | s | _ | s | y | n | c |
|---|---|---|---|---|---|---|---|---|---|---|
| # | 0 | 1 | 2 | 3 | 4 | 5 | 6 | 7 | 8 | 9 |
| t | 1 | 1 | 1 | 2 | | | | | | |
| t | 2 | 2 | 1 | 1 | | | | | | |
| s | 3 | 3 | 2 | | | | | | | |
| / | 4 | 3 | 3 | | | | | | | |
| s | 5 | 4 | 4 | | | | | | | |
| y | 6 | 5 | 5 | | | | | | | |
| n | 7 | 6 | 6 | | | | | | | |
| c | 8 | 7 | 7 | | | | | | | |
| / | 9 | 8 | 8 | | | | | | | |

**FIG. 4b**

| | # | / | t | t | s | _ | s | y | n | c |
|---|---|---|---|---|---|---|---|---|---|---|
| # | 0 | 1 | 2 | 3 | 4 | 5 | 6 | 7 | 8 | 9 |
| t | 1 | 1 | 1 | 2 | 3 | 4 | 5 | 6 | 7 | 8 |
| t | 2 | 2 | 1 | 1 | 2 | 3 | 4 | 5 | 6 | 7 |
| s | 3 | 3 | 2 | 2 | 1 | 2 | 3 | 4 | 5 | 6 |
| / | 4 | 3 | 3 | 2 | 2 | 2 | 3 | 4 | 5 | 6 |
| s | 5 | 4 | 4 | 4 | 3 | 3 | 2 | 3 | 4 | 5 |
| y | 6 | 5 | 5 | 5 | 4 | 4 | 3 | 2 | 3 | 4 |
| n | 7 | 6 | 6 | 6 | 5 | 5 | 4 | 3 | 2 | 3 |
| c | 8 | 7 | 7 | 7 | 6 | 6 | 5 | 4 | 3 | 2 |
| / | 9 | 8 | 8 | 8 | 7 | 7 | 6 | 5 | 4 | 3 |

**FIG. 5a**

| | # | / | t | t | s | _ | s | y | n | c |
|---|---|---|---|---|---|---|---|---|---|---|
| # | 0 | 1 | 2 | 3 | 4 | 5 | 6 | 7 | 8 | 9 |
| t | 1 | 1 | 1 | 2 | 3 | 4 | 5 | 6 | 7 | 8 |
| t | 2 | 2 | 1 | 1 | 2 | 3 | 4 | 5 | 6 | 7 |
| s | 3 | 3 | 2 | 2 | 1 | 2 | 3 | 4 | 5 | 6 |
| / | 4 | 3 | 3 | 3 | 2 | 2 | 3 | 4 | 5 | 6 |
| s | 5 | 4 | 4 | 4 | 3 | 3 | 2 | 3 | 4 | 5 |
| y | 6 | 5 | 5 | 5 | 4 | 4 | 3 | 2 | 3 | 4 |
| n | 7 | 6 | 6 | 6 | 5 | 5 | 4 | 3 | 2 | 3 |
| c | 8 | 7 | 7 | 7 | 6 | 6 | 5 | 4 | 3 | 2 |
| / | 9 | 8 | 8 | 8 | 7 | 7 | 6 | 5 | 4 | 3 |

**FIG. 5b**

**FIG. 6**

**FIG. 7**

**FIG. 8**

**FIG. 9**

**FIG. 10**

## INTERNATIONAL SEARCH REPORT

| International application No. |
| --- |
| **PCT/CN2023/115292** |

**A.    CLASSIFICATION OF SUBJECT MATTER**

G06F18/22(2023.01)i

According to International Patent Classification (IPC) or to both national classification and IPC

**B.    FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, CNABS, CNKI, ENTXTC, ENTXT, DWPI: 编辑距离, 采样, 概率分布, 距离矩阵, 相似度, 相似性, 字符串, edit, distance, string, similarity, sampling, probability, distribution, distance, matrix

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 115640523 A (DOUYIN VISION CO., LTD.) 24 January 2023 (2023-01-24)<br>entire document | 1-15 |
| A | CN 103399907 A (SHENZHEN AUDAQUE DATA TECHNOLOGY CO., LTD.) 20 November 2013 (2013-11-20)<br>entire document | 1-15 |
| A | CN 114692594 A (SHANGHAI XIMALAYA TECHNOLOGY CO., LTD.) 01 July 2022 (2022-07-01)<br>entire document | 1-15 |
| A | US 2019278850 A1 (IBM) 12 September 2019 (2019-09-12)<br>entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 November 2023** | **20 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/115292**

| Patent document cited in search report | | | Publication date (day/month/year) | Patent family member(s) | | | Publication date (day/month/year) |
|---|---|---|---|---|---|---|---|
| CN | 115640523 | A | 24 January 2023 | None | | | |
| CN | 103399907 | A | 20 November 2013 | WO | 2015014287 | A1 | 05 February 2015 |
| CN | 114692594 | A | 01 July 2022 | None | | | |
| US | 2019278850 | A1 | 12 September 2019 | US | 11222054 | B2 | 11 January 2022 |

Form PCT/ISA/210 (patent family annex) (July 2022)

**EP 4 607 376 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211274116